# EUROPEAN PATENT APPLICATION

(11) **EP 4 818 228 A1**
(43) Date of publication of application: **07.10.2026**
(21) Application number: 24897671.4
(22) Date of filing: 28.11.2024
(51) Int. Cl.: C08G 64/04

(54) **POLYCARBONATE RESIN AND POLYCARBONATE RESIN SOLUTION**

(30) Priority: 29.11.2023 JP 2023201958
(71) Applicant: MITSUBISHI GAS CHEMICAL COMPANY, INC., Chiyoda-ku Tokyo 100-8324 (JP)
(72) Inventor: HORIUCHI, Shoki, Kamisu-shi, Ibaraki 314-0102 (JP)
(74) Representative: Hoffmann Eitle
(86) International application number: PCT/JP2024/042245
(87) International publication number: WO 2025/115987

(57) **Abstract**

The problem to be addressed is poor reactivity of a reactive polycarbonate in crosslinking reactions. Another problem to be addressed is a lack of versatility of conventional reactive polycarbonates requiring a secondary component such as a polymerization initiator because the reactive polycarbonates cannot be used in various applications. The problems are solved by a polycarbonate resin comprising a structural unit (A) derived from a monomer represented by general formula (1) and/or a structural unit (B) derived from a monomer represented by general formula (2), and a structural unit (C) derived from a monomer represented by general formula (3), wherein the proportion of the total of the structural unit (A) and the structural unit (B) to the total number of moles of structural units (A)-(C) constituting the polycarbonate resin is 0.5-25 mol%, and the proportion of the structural unit (C) is 75-99.5 mol%. In formulae (1) to (3), R₁₁ to R₃₈ are as stated in the description of the present application.

## Description

### TECHNICAL FIELD

The present invention relates to a polycarbonate resin, a polycarbonate resin solution, and the like.

### BACKGROUND ART

Reactive polycarbonate (reactive PC) resins containing reactive sites are known (e.g., Patent literature 1-3). Reactive polycarbonate resins contain reactive active sites for polymerization reactions, etc. In particular, terminal-reactive polycarbonates having reactive groups at the ends are widely used. Reactive polycarbonate resins are often used as compositions added with a polymerization initiator, additives, etc., and polymers are produced through a polymerization reaction from such resin compositions.

### PRIOR ART DOCUMENTS

### PATENT DOCUMENTS

Patent literature 1: WO2021/241378
Patent literature 2: Japanese Unexamined Patent Application Publication No. S54(1979)-064592
Patent literature 3: Japanese Unexamined Patent Application Publication No. H11(1999)-172003

### SUMMARY OF THE INVENTION

### PROBLEMS TO BE SOLVED BY THE INVENTION

Most of the existing reactive PCs are produced using a terminating agent having a functional group, and only the terminal site is reactive. In a terminal-reactive polycarbonate obtained in this way, the reactive active site is limited to the ends and the crosslinking reactivity is often poor.

Additionally, for reactive PCs, which require secondary components such as a polymerization initiator to initiate a polymerization reaction, the choice of additives is limited, and the polymerization reaction needs to be conducted under planned reaction conditions. For this reason, conventional reactive PCs tend to be less versatile, as they cannot be used for a variety of applications.

### MEANS FOR SOLVING THE PROBLEMS

The present invention comprises, for example, the following.
[1] A polycarbonate resin comprising:
   a structural unit (A) derived from a monomer represented by general formula (1) below and/or a structural unit (B) derived from a monomer represented by general formula (2) below, and
   a structural unit (C) derived from a monomer represented by general formula (3) below,
   wherein the total proportion of the structural units (A) and (B) is 0.5-25 mol%, and the proportion of the structural unit (C) is 75-99.5 mol%, relative to the total number of moles of the structural units (A)-(C) constituting the polycarbonate resin: 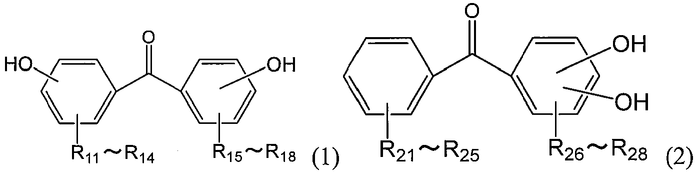
   in general formula (1),
   R₁₁-R₁₄ and R₁₅-R₁₈ each independently represent hydrogen, fluorine, chlorine, bromine, iodine, or an optionally substituted C1-C20 alkyl group, C6-C12 aryl group, C2-C12 alkenyl group, C1-C5 alkoxy group, or C7-C17 aralkyl group, and
   in general formula (2),
   R₂₁-R₂₅ and R₂₆-R₂₈ each independently represent hydrogen, fluorine, chlorine, bromine, iodine, or an optionally substituted C1-C20 alkyl group, C6-C12 aryl group, C2-C12 alkenyl group, C1-C5 alkoxy group, or C7-C17 aralkyl group; 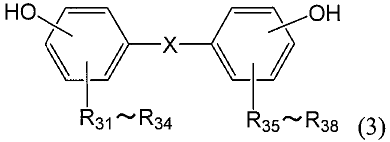
   in general formula (3),
   R₃₁-R₃₄ and R₃₅-R₃₈ each independently represent hydrogen, fluorine, chlorine, bromine, iodine, or an optionally substituted C1-C20 alkyl group, C6-C12 aryl group, C2-C12 alkenyl group, C1-C5 alkoxy group, or C7-C17 aralkyl group, and
   X is as follows: 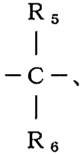 -S-, -(CH₂)_{C}-, -O-, -SO-, -SO₂-, 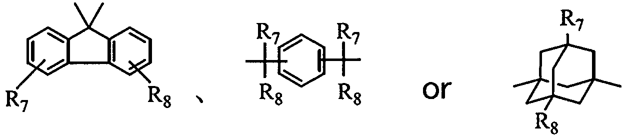
   wherein, R₅ and R₆ each independently represent hydrogen, fluorine, chlorine, bromine, iodine, or an optionally substituted C1-C20 alkyl group, C1-C5 alkoxy group, or C6-C12 aryl group, or R₅ and R₆ represent groups that bind to each other to form a C5-20 carbon ring or a heterocyclic ring having 5-12 elements (except when both of R₅ and R₆ are methyl groups),
   R₇ and R₈ each independently represent hydrogen, fluorine, chlorine, bromine, iodine, or an optionally substituted C1-C9 alkyl group, C1-C5 alkoxy group, C2-C12 alkenyl group, or C6-C12 aryl group, and
   c represents an integer from 0 to 20.
[2] The polycarbonate resin according to [1] above, wherein the proportion of the structural units (A) and (B) is 5-20 mol%, and the proportion of the structural unit (C) is 80-95 mol%, relative to the total number of moles of the structural units (A)-(C) constituting the polycarbonate resin.
[3] The polycarbonate resin according to [1] or [2] above, e.g. [1] above, wherein
   in general formula (1) above,
   R₁₁-R₁₄ and R₁₅-R₁₈ each independently represent hydrogen, or an optionally substituted C1-C20 alkyl group or C1-C5 alkoxy group, and
   in general formula (2) above,
   R₂₁-R₂₅ and R₂₆-R₂₈ each independently represent hydrogen, or an optionally substituted C1-C20 alkyl group or C1-C5 alkoxy group.
[4] The polycarbonate resin according to any one of [1]-[3] above, e.g., [3] above, wherein the monomer represented by general formula (1) above is represented by formula (1-1) below, and the monomer represented by general formula (2) above is represented by formula (2-1) below: 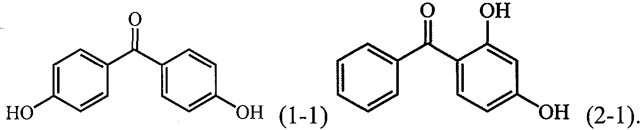
[5] The polycarbonate resin according to any one of [1]-[4] above, e.g. [1] above, wherein
   in general formula (3) above,
   R₃₁-R₃₄ and R₃₅-R₃₈ each independently represent hydrogen, or an optionally substituted C1-C20 alkyl group or C1-C5 alkoxy group, and
   X is as follows: 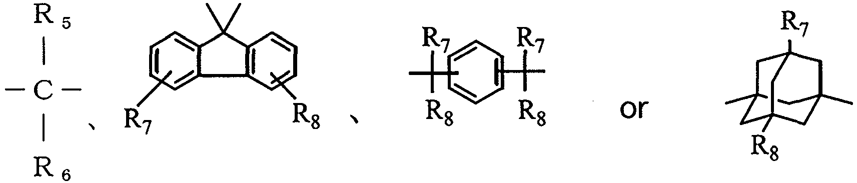
   wherein, R₅ and R₆ each independently represent hydrogen, or an optionally substituted C1-C20 alkyl group or C6-C12 aryl group, or R₅ and R₆ represent groups that bind to each other to form a C5-20 carbon ring or a heterocyclic ring having 5-12 elements, and
   R₇ and R₈ each independently represent hydrogen, or an optionally substituted C1-C9 alkyl group or C6-C12 aryl group.
[6] The polycarbonate resin according to any one of [1]-[4] above, e.g., [5] above, wherein the monomer represented by general formula (3) above is selected from the group consisting of formulae (3-1)-(3-4) below: 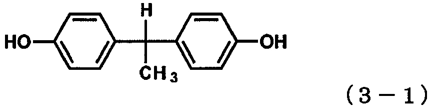 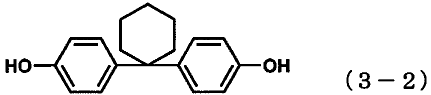 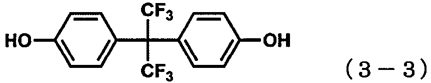 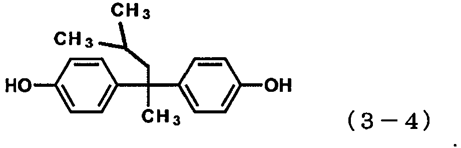
[7] The polycarbonate resin according to any one of [1]-[6] above, e.g., [1] above, wherein a terminal structure of the polycarbonate resin is represented by formula (4) below: 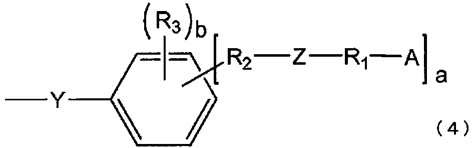
   in general formula (4),
   A is a vinyl group, an isopropenyl group, a styryl group or a methine group,
   R₁ and R₂ are each independently selected from the group consisting of a single bond and an optionally substituted C1-C20 alkylene group,
   R₃ are each independently selected from the group consisting of a hydrogen atom, a hydroxy group, an optionally substituted C1-C20 alkyl group, an optionally substituted C1-C10 alkoxy group, an optionally substituted C6-C12 aryl group, and an optionally substituted heteroaryl group having 5-12 elements,
   Z are each independently selected from the group consisting of a single bond, an ether group, a carbonyl group, and an ester group,
   a is an integer from 0 to 3,
   b is an integer from 1 to 4, and
   Y is an ether group or an ester group.
[8] The polycarbonate resin according to any one of [1]-[7] above, e.g. [1] above, wherein the terminal structure of the polycarbonate resin is derived from a compound selected from the group consisting of p-t-butylphenol (PTBP), 2-[2-hydroxy-5-[2-(methacryloyloxy)ethyl]phenyl]-2H-benzotriazole (MBZT), 4-hydroxybenzophenone (4-HBP), polyoxyalkylene-monoalkyl ether, and p-hydroxyphenyl ethanol (PHEP).
[9] The polycarbonate resin according to any one of [1]-[8] above, e.g., [1] above, wherein the main chain of the polycarbonate resin does not contain an unsaturated bond.
[10] A monomer mixture for polymerization for forming structural units of a thermoplastic resin, comprising:
   a monomer (a) represented by general formula (1) below and/or a monomer (b) represented by general formula (2) below; and
   a monomer (c) represented by general formula (3) below,
   wherein the total proportion of the monomers (a) and (b) is 0.5-25 mol% and the proportion of the monomer (c) is 75-99.5 mol%, relative to the total number of moles of the monomers (a)-(c): 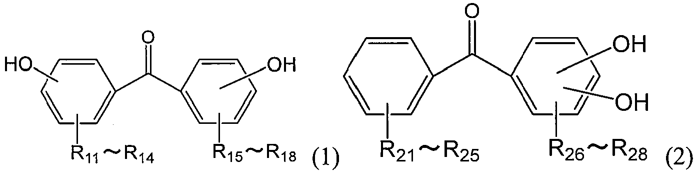
   in general formula (1),
   R₁₁-R₁₄ and R₁₅-R₁₈ each independently represent hydrogen, fluorine, chlorine, bromine, iodine, or an optionally substituted C1-C20 alkyl group, C6-C12 aryl group, C2-C12 alkenyl group, C1-C5 alkoxy group, or C7-C17 aralkyl group, and
   in general formula (2),
   R₂₁-R₂₅ and R₂₆-R₂₈ each independently represent hydrogen, fluorine, chlorine, bromine, iodine, or an optionally substituted C1-C20 alkyl group, C6-C12 aryl group, C2-C12 alkenyl group, C1-C5 alkoxy group, or C7-C17 aralkyl group; 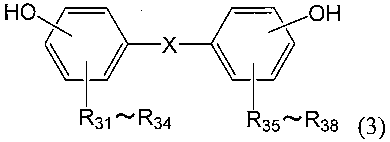
   in general formula (3),
   R₃₁-R₃₄ and R₃₅-R₃₈ each independently represent hydrogen, fluorine, chlorine, bromine, iodine, or an optionally substituted C1-C20 alkyl group, C6-C12 aryl group, C2-C12 alkenyl group, C1-C5 alkoxy group, or C7-C17 aralkyl group, and
   X is as follows: 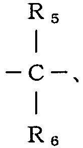 -S-, -(CH₂)_{C}-, -O-, -SO-, -SO₂-, 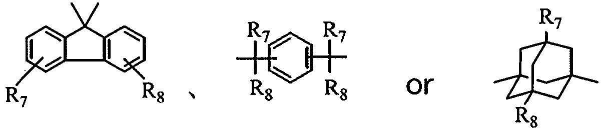
   wherein, R₅ and R₆ each independently represent hydrogen, fluorine, chlorine, bromine, iodine, or an optionally substituted C1-C20 alkyl group, C1-C5 alkoxy group, or C6-C12 aryl group, or R₅ and R₆ represent groups that bind to each other to form a C5-20 carbon ring or a heterocyclic ring having 5-12 elements (except when both of R₅ and R₆ are methyl groups),
   R₇ and R₈ each independently represent hydrogen, fluorine, chlorine, bromine, iodine, or an optionally substituted C1-C9 alkyl group, C1-C5 alkoxy group, C2-C12 alkenyl group, or C6-C12 aryl group, and
   c represents an integer from 0 to 20.
[11] A polycarbonate resin solution comprising the polycarbonate resin according to any one of [1]-[9] above, e.g. [1] above, and a solvent.
[12] The polycarbonate resin solution according to [11] above, wherein the solvent contains at least a (meth)acrylate ester solvent.
[13] The polycarbonate resin solution according to [12] above, wherein the (meth)acrylate ester is tetrahydrofurfuryl methacrylate (THF-M).
[14] The polycarbonate resin solution according to any one of [11]-[13] above, e.g., [11] above, wherein the concentration of the polycarbonate resin is 1-20% by mass based on the total mass of the polycarbonate resin solution.
[15] A method for producing a crosslinked polycarbonate resin, comprising subjecting the polycarbonate resin solution according to any one of [11]-[14] above, e.g., [11] above, to UV irradiation.
[16] A crosslinked polycarbonate resin, obtained by the method according to [15] above.
[17] A molded body comprising the crosslinked polycarbonate resin according to [16] above.

### ADVANTAGEOUS EFFECT OF THE INVENTION

According to the present invention, reactivity of a polymerization/crosslinking reaction can be easily adjusted based on the number of functional groups, etc., and polymerization is possible with a resin alone without additives such as a polymerization initiator, thereby achieving a polycarbonate resin which can improve the degree of freedom of physical properties of the resulting polymer. With the polycarbonate resin of the present invention, reactivity can be maintained even in a long-chain, i.e., polymeric, state.

According to the present invention, it is also possible to achieve a monomer mixture for polymerization, which is suitable for producing the aforementioned polycarbonate resin, a polycarbonate resin solution containing a polycarbonate resin and a solvent, and the like.

### DESCRIPTION OF EMBODIMENTS

Hereinafter, a preferred embodiment of the present invention will be described in detail.

### <1. Polycarbonate resin>

### 1-1. Structural units of polycarbonate resin and contents thereof

A polycarbonate resin comprises at least either one of a structural unit (A) derived from a monomer represented by general formula (1) and a structural unit (B) derived from a monomer represented by general formula (2).

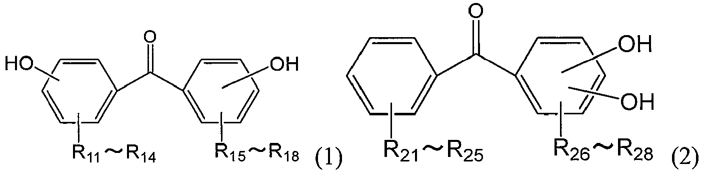

In general formula (1), R₁₁-R₁₄ and R₁₅-R₁₈ each independently represent hydrogen, fluorine, chlorine, bromine, iodine, or an optionally substituted C1-C20 alkyl group, C6-C12 aryl group, C2-C12 alkenyl group, C1-C5 alkoxy group, or C7-C17 aralkyl group.

R₁₁-R₁₄ and R₁₅-R₁₈ in general formula (1) preferably each independently represent hydrogen, or an optionally substituted C1-C20 alkyl group or C1-C5 alkoxy group. R₁₁-R₁₄ and R₁₅-R₁₈ more preferably each independently represent hydrogen, or an optionally substituted C1-C10 alkyl group or C1-C3 alkoxy group, and still more preferably each independently represent hydrogen, or an optionally substituted C1-C5 alkyl group or C1-C2 alkoxy group.

In addition, preferably at least five or more of R₁₁-R₁₄ and R₁₅-R₁₈ are hydrogen, more preferably six or more are hydrogen, and still more preferably seven or more or all are hydrogen.

Specific examples of the preferable monomer represented by general formula (1) include those represented by formula (1-1) below.

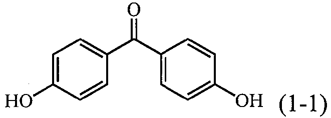

In general formula (2) above, R₂₁-R₂₅ and R₂₆-R₂₈ each independently represent hydrogen, fluorine, chlorine, bromine, iodine, or an optionally substituted C1-C20 alkyl group, C6-C12 aryl group, C2-C12 alkenyl group, C1-C5 alkoxy group, or C7-C17 aralkyl group.

R₂₁-R₂₅ and R₂₆-R₂₈ in general formula (2) preferably each independently represent hydrogen, or an optionally substituted C1-C20 alkyl group or C1-C5 alkoxy group. R₂₁-R₂₅ and R₂₆-R₂₈ more preferably each independently represent hydrogen, or an optionally substituted C1-C10 alkyl group or C1-C3 alkoxy group, and still more preferably each independently represent hydrogen, or an optionally substituted C1-C5 alkyl group or C1-C2 alkoxy group.

In addition, preferably at least five or more of R₂₁-R₂₅ and R₂₆-R₂₈ are hydrogen, more preferably six or more are hydrogen, and still more preferably seven or more or all are hydrogen.

One example of a preferable monomer represented by general formula (2) is represented by formula (2-1) below.

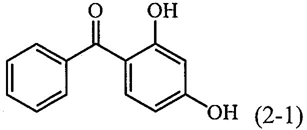

The structural units (A) and (B) contained in the main chain of the polycarbonate resin both function as polymerizable, reactive active groups. Therefore, even if the polycarbonate resin does not contain special additives for polymerization, such as a polymerization initiator, a polymerization reaction can occur through irradiation with an energy ray, such as an ultraviolet ray. This is because a crosslinking reaction similar to a benzopinacol synthesis reaction between compounds of two molecules represented by general formula (1) or (2) above occurs.

A polycarbonate resin containing either one of such structural units (A) and (B) can maintain reactivity despite its long-chain structure as a polymer. Furthermore, in the case of a polycarbonate resin having a structural unit (A) or (B), crosslinking positions can be provided at a wide range of sites other than the ends, and reactivity can easily be adjusted according to the amount of monomers represented by general formula (1) or (2) used.

The polycarbonate resin further comprises a structural unit (C) derived from a monomer represented by the general formula (3).

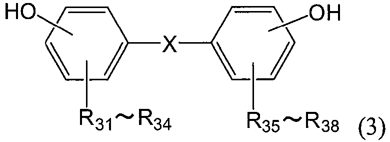

In general formula (3), R₃₁-R₃₄ and R₃₅-R₃₈ each independently represent hydrogen, fluorine, chlorine, bromine, iodine, or an optionally substituted C1-C20 alkyl group, C6-C12 aryl group, C2-C12 alkenyl group, C1-C5 alkoxy group, or C7-C17 aralkyl group.

R₃₁-R₃₄ and R₃₅-R₃₈ in general formula (3) preferably each independently represent hydrogen, or an optionally substituted C1-C20 alkyl group or C1-C5 alkoxy group. R₃₁-R₃₄ and R₃₅-R₃₈ more preferably each independently represent hydrogen, or an optionally substituted C1-C10 alkyl group or C1-C3 alkoxy group, and still more preferably each independently represent hydrogen, or an optionally substituted C1-C5 alkyl group or C1-C2 alkoxy group.

In addition, preferably at least five or more of R₃₁-R₃₄ and R₃₅-R₃₈ are hydrogen, more preferably six or more are hydrogen, and still more preferably seven or more or all are hydrogen.

Also, in general formula (3), X is represented by any one of the following formulae. 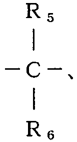 -S-, -(CH₂)_{C}-, -O-, -SO-, -SO₂-,

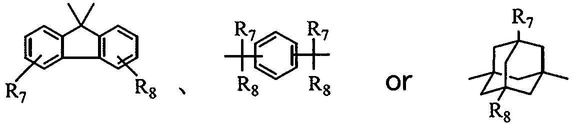

In the above formula, R₅ and R₆ each independently represent hydrogen, fluorine, chlorine, bromine, iodine, or an optionally substituted C1-C20 alkyl group, C1-C5 alkoxy group, or C6-C12 aryl group, or R₅ and R₆ represent groups that bind to each other to form a C5-20 carbon ring or a heterocyclic ring having 5-12 elements, where not both of R₅ and R₆ are methyl groups.

In the above formula, R₇ and R₈ each independently represent hydrogen, fluorine, chlorine, bromine, iodine, or an optionally substituted C1-C9 alkyl group, C1-C5 alkoxy group, C2-C12 alkenyl group, or C6-C12 aryl group.

In the above formula, c represents an integer from 0 to 20, preferably from 1 to 15, and more preferably from 1 to 10.

Also, in general formula (3), X is preferably represented by any one of the following formulae.

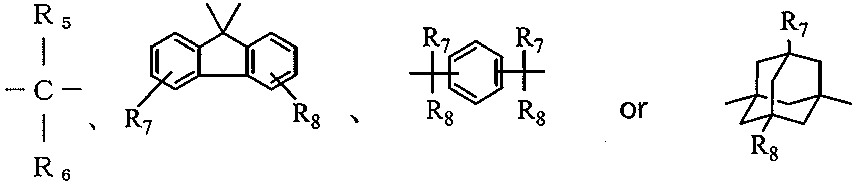

Wherein, R₅ and R₆ each independently represent hydrogen, or an optionally substituted C1-C20 alkyl group or C6-C12 aryl group, or R₅ and R₆ represent groups that bind to each other to form a C5-20 carbon ring or a heterocyclic ring having 5-12 elements.

Additionally, R₇ and R₈ each independently represent hydrogen, or an optionally substituted C1-C9 alkyl group or C6-C12 aryl group.

R₅ and R₆ of X in general formula (3) are more preferably each independently hydrogen, or an optionally substituted C1-C12 alkyl group, or R₅ and R₆ bind to each other to form an optionally substituted C5-C20 carbon ring, more preferably an optionally substituted C6-C12 carbon ring.

Additionally, R₇ and R₈ of X in general formula (3) each independently represent hydrogen, or an optionally substituted C1-C5 alkyl group or C6-C8 aryl group.

Specific examples of a preferable monomer represented by general formula (3) are represented by formulae (3-1)-(3-4) below.

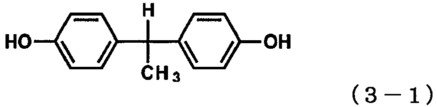

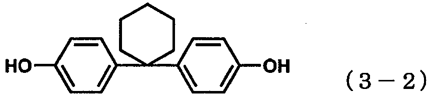

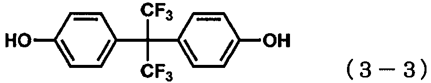

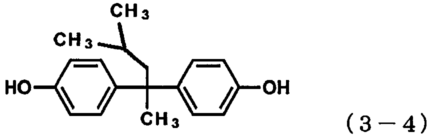

In the polycarbonate resin, the total proportion of the structural units (A) and (B) is 0.5-25 mol%, relative to the total number of moles of the structural units (A)-(C) constituting the polycarbonate resin. The proportion of the total number of moles of the structural units (A) and (B) is preferably 1-22 mol% or 2-24 mol%, more preferably 3-18 mol%, 5-15 mol% (more than 5 mol%, or 5 mol% or more but 15 mol% or less), 5-20 mol% (more than 5 mol%, or 5 mol% or more but 20 mol% or less), or 5-25 mol% (more than 5 mol%, or 5 mol% or more but 25 mol% or less), and particularly preferably 5-20 mol%, relative to the total number of moles of the structural units (A)-(C).

In the polycarbonate resin, the proportion of the structural unit (C) is 75-99.5 mol%, relative to the total number of moles of the structural units (A)-(C) constituting the polycarbonate resin. The proportion of the number of moles of the structural unit (C) is preferably 76-96 mol% or 78-98 mol%, more preferably 79-97 mol%, 75-95 mol% (75 mol% or more but 95 mol% or less), 80-95 mol% (80 mol% or more but 95 mol% or less), 85-95 mol% (85 mol% or more but 95 mol% or less), or the like, relative to the total number of moles of the structural units (A)-(C).

Note that the indicated range (mol%) regarding the content of the structural units (A)-(C) mentioned above (including both the total content of the structural units (A) and (B), and the content of the structural unit (C)) includes the range below or equal to the upper limit and above or equal to the lower limit.

If the polycarbonate resin contains a structural unit other than the structural units (A)-(C), the total proportion of the structural units (A) and (B) is preferably 0.5-25 mol%, more preferably 1-22 mol% or 2-24 mol%, still more preferably 3-18 mol%, 5-15 mol% (more than 5 mol%, or 5 mol% or more but 15 mol% or less), 5-20 mol% (more than 5 mol%, or 5 mol% or more but 20 mol% or less), or 5-25 mol% (more than 5 mol%, or 5 mol% or more but 25 mol% or less), and particularly preferably 5-20 mol%, relative to the total number of moles of all structural units.

Additionally, if the polycarbonate resin contains a structural unit other than the structural units (A)-(C), the proportion of the structural unit (C) is preferably 75-99.5 mol%, more preferably 76-96 mol% or 78-98 mol%, and may be 79-97 mol%, 75-95 mol% (75 mol% or more but 95 mol% or less), 80-95 mol% (80 mol% or more but 95 mol% or less), 85-95 mol% (85 mol% or more but 95 mol% or less), or the like, relative to the total number of moles of all structural units.

Note that the indicated range (mol%) regarding the content of the structural units (A)-(C) mentioned above (including both the total content of the structural units (A) and (B), and the content of the structural unit (C)) includes the range below or equal to the upper limit and above or equal to the lower limit.

In the polycarbonate resin, the total number of moles of the structural units (A)-(C) is preferably 50 mol% or more, more preferably 70 mol% or more, still more preferably 90 mol% or more, and particularly preferably 95 mol% or more or substantially 100 mol%, based on the total number of moles of all structural units.

The substituents in the structural units (A)-(C) of the polycarbonate resin are each independently selected from halogen, a hydroxy group, a cyano group, a C1-C20 alkyl group, a C1-C20 alkenyl group, a C6-C12 aryl group, and the like. When an alkyl group, an alkenyl group, or an aryl group is included as a substituent, the number of carbon atoms in R₁₁-R₃₈ above refers to the total number of carbon atoms, including those in the substituent.

The total number of moles of structural units having unsaturated bonds among all structural units in the polycarbonate resin is preferably 10 mol% or less, more preferably 5 mol% or less, and still more preferably 3 mol% or less, based on the total number of moles of all structural units. Particularly preferably, the polycarbonate resin does not contain an unsaturated bond.

### 1-2. Terminal structure of polycarbonate resin

The terminal structure of the polycarbonate resin is preferably represented by formula (4) below.

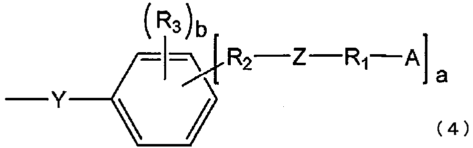

In general formula (4), A is a vinyl group, an isopropenyl group, a styryl group, or a methine group, preferably a vinyl group.

In general formula (4), R₁ and R₂ are each independently selected from the group consisting of a single bond and an optionally substituted C1-C20 alkylene group, preferably selected from a single bond and an optionally substituted C1-C10 alkylene group, more preferably selected from a single bond and an optionally substituted C1-C5 alkylene group, and still more preferably selected from a single bond and an optionally substituted C1-C3 alkylene group.

In general formula (4), R₃ are each independently selected from the group consisting of a hydrogen atom, a hydroxy group, an optionally substituted C1-C20 alkyl group, an optionally substituted C1-C10 alkoxy group, an optionally substituted C6-C12 aryl group, and an optionally substituted C5-C12 heteroaryl group. R₃ is preferably selected from a hydrogen atom, a hydroxy group, an optionally substituted C1-C10 alkyl group, and an optionally substituted C1-C6 alkoxy group, more preferably selected from a hydrogen atom, a hydroxy group, an optionally substituted C1-C5 alkyl group, and an optionally substituted C1-C3 alkoxy group, and particularly preferably selected from a hydrogen atom, a hydroxy group, an optionally substituted C1-C3 alkyl group, and an optionally substituted C1-C2 alkoxy group.

In general formula (4), Z are each independently selected from the group consisting of a single bond, an ether group (O atom bonded to adjacent carbon atoms), a carbonyl group, and an ester group.

In general formula (4), a is an integer from 0 to 3, preferably an integer from 0 to 2 or an integer from 1 to 3, and more preferably an integer of 0 or 1 or an integer of 1 or 2. Additionally, in general formula (4), b is an integer from 1 to 4, preferably an integer from 1 to 3, and more preferably an integer of 1 or 2. Alternatively, b may be 0.

In general formula (4), Y is an ether group or an ester group, and preferably an ether group.

The terminal structure of the polycarbonate resin is preferably derived from a compound selected from the group consisting of p-t-butylphenol (PTBP), 2-[2-hydroxy-5-[2-(methacryloyloxy)ethyl]phenyl]-2H-benzotriazole (MBZT), 4-hydroxybenzophenone (4-HBP), polyoxyalkylene-monoalkyl ether, and p-hydroxyphenyl ethanol (PHEP).

In the case where the terminal structure of the polycarbonate resin is substituted, the substituents are each independently selected from halogen, a hydroxy group, a cyano group, a C1-C20 alkyl group, a C1-C20 alkenyl group, a C6-C12 aryl group, and the like. When an alkyl group, an alkenyl group, or an aryl group is included as a substituent, the number of carbon atoms in R₁-R₃ above refers to the total number of carbon atoms, including those in the substituent.

### 1-3. Method for producing polycarbonate resin

The polycarbonate resin can be produced by a common method. For example, it can be produced as follows.

The polycarbonate resin used in the present invention can be produced, for example, by reacting: bisphenols, preferably monomers (a)-(c), that give structural units (A)-(C), respectively; a compound such as a monovalent phenol that gives a terminal structure, preferably a monomer having a molecular structure corresponding to the structure of formula (4); and a carbonate ester-forming compound. A known method, for example, the direct reaction between a bisphenol and phosgene (phosgene method) or the transesterification reaction between a bisphenol and a bisaryl carbonate (transesterification method), can be employed.

According to the phosgene method, for example, bisphenols that give structural units (A)-(C), a compound such as a monovalent phenol that gives the terminal structure, and phosgene are reacted in the presence of an acid-binding agent and a solvent. For example, a pyridine, a hydroxide of an alkali metal such as sodium hydroxide or potassium hydroxide, or the like may be used as the acid-binding agent while methylene chloride, chloroform, or the like may be used as the solvent. In addition, in order to accelerate the condensation polymerization reaction, it is preferable to use a catalyst, such as a tertiary amine (e.g., triethylamine) or a quaternary ammonium salt (e.g., benzyltriethylammonium chloride).

While a compound such as a monovalent phenol that gives the terminal structure functions as a polymerization regulator, other monovalent phenol, such as phenol, p-t-butylphenol, p-cumylphenol, and alkyl-substituted long-chain phenol, can be used at a percentage of less than 50% by mass in combination with the monovalent phenol that gives the terminal structure. Furthermore, an antioxidant such as sodium sulfite or hydrosulfite, and a branching agent such as phloroglucin or isatin bisphenol may also be added in small amounts if desired. A suitable reaction temperature is usually in the range of 0-150°C, preferably 5-40°C. While the reaction time depends on the reaction temperature, it is usually 0.5 minutes to 10 hours, preferably 1 minute to 2 hours. The pH of the reaction system is desirably kept at 10 or higher during the reaction.

On the other hand, according to the transesterification method, for example, bisphenols that give structural units (A)-(C), a compound such as a monovalent phenol that gives the terminal structure, and bisaryl carbonate are mixed and reacted at a high temperature under a reduced pressure.

Examples of the bisaryl carbonate include bisallyl carbonate such as diphenyl carbonate, di-p-tolyl carbonate, phenyl-p-tolyl carbonate, di-p-chlorophenyl carbonate, and dinaphthyl carbonate. It is also possible to use two or more types of these compounds in combination. The reaction is usually carried out at a temperature in the range of 150-350°C, preferably 200-300°C, and the final degree of pressure reduction is preferably 1 mmHg or lower to distill phenols derived from the bisaryl carbonate generated by the transesterification reaction away from the system. While the reaction time depends on the reaction temperature and the degree of pressure reduction, it is usually about 1-24 hours. The reaction is preferably performed in an inert gas atmosphere such as nitrogen or argon. If desired, a small amount of a molecular weight regulator other than the compound such as a monovalent phenol that gives the terminal structure may be used in combination, or an antioxidant or a branching agent may be added to carry out the reaction.

### <2. Monomer mixture for polymerization>

A monomer mixture for polymerization contains a monomer (a) represented by general formula (1) above and/or a monomer (b) represented by general formula (2) above, and a monomer (c) represented by general formula (3) above. The monomer mixture for polymerization can form structural units of a thermoplastic resin, and is suitably used to produce the aforementioned polycarbonate resin.

The monomer mixture for polymerization can be easily produced by mixing the monomers (a)-(c) using a common method.

In the monomer mixture for polymerization, for example, the total proportion of the monomers (a) and (b) is 0.5-25 mol% and the proportion of the monomer (c) is 75-99.5 mol%, relative to the total number of moles of the monomers (a)-(c). Preferably, the total proportion of the monomers (a) and (b) is 1-22 mol% or 2-24 mol%, and the proportion of the monomer (c) is 78-99 mol% or 76-98 mol%, relative to the total number of moles of the monomers (a)-(c). More preferably, the total proportion of the monomers (a) and (b) may be 3-18 mol%, 5-15 mol% (more than 5 mol%, or 5 mol% or more but 15 mol% or less), 5-20 mol% (more than 5 mol%, or 5 mol% or more but 20 mol% or less), 5-25 mol% (more than 5 mol%, or 5 mol% or more but 25 mol% or less), or the like.

The proportion of the monomer (c) relative to the total number of moles of the monomers (a)-(c) may be, for example, 82-97 mol%, 85-95 mol% (85 mol% or more but 95 mol% or less), 80-95 mol% (80 mol% or more but 95 mol% or less), 75-95 mol% (75 mol% or more but 95 mol% or less), or the like. The proportion of the monomer (c) relative to the total number of moles of the monomers (a)-(c) may be 76-96 mol%, 78-98 mol%, 79-97 mol%, or the like.

For example, the total proportion of the monomers (a) and (b) is 5-20 mol% and the proportion of the monomer (c) is 80-95 mol%, relative to the total number of moles of the monomers (a)-(c). The mole ratio of the monomers (a)-(c) in the monomer mixture for polymerization is preferably the same as the mole ratio of the structural units (A)-(C) in the polycarbonate resin described above. Note that the range (mol%) regarding the content of the monomers (a)-(c) described above includes the range below or equal to the upper limit and above or equal to the lower limit.

In the monomer mixture for polymerization, components other than the monomers (a)-(c) may not be contained, and preferably, the total number of moles of the monomers (a)-(c) in the monomer mixture for polymerization based on the total number of moles of all monomers is preferably 50 mol% or more, more preferably 70 mol% or more, still more preferably 90 mol% or more, and particularly preferably 95 mol% or more or substantially 100 mol%.

### <3. Polycarbonate resin solution>

A polycarbonate resin solution contains the aforementioned polycarbonate resin and a solvent. While the type of the solvent is not particularly limited as long as it can dissolve the polycarbonate resin, for example, a (meth)acrylate compound having a (meth)acryloyl group (a (meth)acrylate group), an aromatic compound having an aromatic ring, or the like may be used as the solvent.

The (meth)acrylate compound as the solvent preferably contains at least a (meth)acrylate ester. While the (meth)acrylate ester is not particularly limited, it is preferably a mono- or di-(meth)acrylate ester having a total carbon number of 4-20, more preferably a mono- or di-(meth)acrylate ester having a total carbon number of 5-15, and still more preferably a mono- or di-(meth)acrylate ester having a total carbon number of 5-10, 5-12, 6-10, 6-12, etc. Specific examples of preferable (meth)acrylate esters include methyl acrylate, methyl methacrylate (MMA), tetrahydrofurfuryl acrylate (THF-A), tetrahydrofurfuryl methacrylate (THF-M), phenylacrylate, hydroxyphenylacrylate, benzyl acrylate (BZA), phenoxymethyl acrylate, phenoxyethyl acrylate, and 1,6-hexanediol diacrylate. Among these, tetrahydrofurfuryl acrylate (THF-A), tetrahydrofurfuryl methacrylate (THF-M), benzyl acrylate (BZA), phenoxyethyl acrylate, and 1,6-hexanediol diacrylate are suitable as the solvent, and specific examples of those particularly preferred include THF-M.

Note that (meth)acrylate esters include acrylate esters and methacrylate esters.

Examples of the aromatic compound as the solvent include styrene, toluene, xylene, ethylbenzene, cumene, phenol, cresol, benzyl alcohol, anisole, benzaldehyde, benzoic acid, phthalic acid, isophthalic acid, terephthalic acid, salicylic acid, and toluidine. Among these, styrene, toluene, and xylene are suitable as the solvent.

The compound as the solvent has a refractive index value of, for example, 1.40 or more but 1.60 or less, preferably has a refractive index value of 1.42 or more but 1.58 or less, and more preferably has a refractive index value of 1.44 or more but 1.56 or less.

The aforementioned compound as the solvent such as a (meth)acrylate ester has excellent compatibility with the polycarbonate resin, and the solubility of the polycarbonate resin is good in the polycarbonate resin solution containing a (meth)acrylate ester or the like as the solvent. The polycarbonate resin solution containing the aforementioned solvent may be able to allow the crosslinking reaction to proceed in the solution state. In addition, the use of such a polycarbonate resin solution results in a good hue in the cured product, which is obtained by polymerizing the polycarbonate resin. Specifically, when the polycarbonate resin contained in the polycarbonate resin solution is cured using a (meth)acrylate ester containing THF-M or the like as a solvent, cloudiness is prevented and a transparent cured product or molded body can be obtained.

Although the concentration of the polycarbonate resin in the polycarbonate resin solution is not particularly limited, the concentration of the polycarbonate resin is preferably 1-20% by mass, based on the total mass of the polycarbonate resin solution. The concentration of the polycarbonate resin in the polycarbonate resin solution is more preferably 2-18% by mass, still more preferably 3-16% by mass, and particularly preferably 5-15% by mass.

The polycarbonate resin solution can be easily produced by mixing the polycarbonate resin and the solvent using a common method.

When the polycarbonate resin solution is used, for example, for forming a coating, it is preferable to maintain the required properties, such as solvent solubility, coating properties, adhesiveness, scratch resistance, impact resistance, in good balance. If the intrinsic viscosity of the polycarbonate resin solution is too low, strength of scratch resistance and impact resistance will be insufficient whereas if the intrinsic viscosity is too high, solvent solubility will decrease and solution viscosity will increase, which will result in deterioration of the coating properties of the resulting coating. As a desirable intrinsic viscosity range for the polycarbonate resin solution, the intrinsic viscosity is preferably in the range of 0.3-2.0 dl/g, and more preferably in the range of 0.35-1.5 dl/g.

### <4. Crosslinked polycarbonate resin>

A crosslinked polycarbonate resin can be obtained by subjecting the aforementioned polycarbonate resin to a crosslinking reaction. A crosslinked polycarbonate resin can be produced, for example, by irradiating the aforementioned polycarbonate resin solution with an energy ray such as an ultraviolet ray to cause a crosslinking reaction between the reactive active groups in the molecules of a plurality of polycarbonate resins contained in the resin solution.

Thus, by polymerizing a polycarbonate resin having a self-polymerization property, for example in a solution form, a polymer of the polycarbonate resin having a crosslinking moiety (a crosslinked polycarbonate resin) can be easily produced without requiring a secondary component such as a polymerization initiator.

### <5. Molded body>

A molded body of the present invention comprises at least a crosslinked polycarbonate resin obtained by crosslinking the polycarbonate resin. Examples of the molded body include molded bodies obtained by crosslinking the polycarbonate resin for various coating and binder resin applications, e.g., cast molded bodies. Specific examples of the molded body include films and coatings (coating films) such as a base material film formed on a base material; binder resins such as an electrophotographic photoconductor and a conductive paste; and adhesives, resin modifiers, UV inks, etc. The base material film is formed, for example, on a PVB (polyvinyl butyral resin) or PET (polyethylene terephthalate resin) base material, and a film as a crosslinked coating formed on this base material has particularly excellent adhesiveness to the base material. Thus, a coating obtained by applying the resin solution and curing it by heating is less likely to be scratched or peeled off due to abrasion or impact during transportation or use than coatings made with conventional resin solutions.

A base material film as a molded body can be produced, for example, by removing the solvent from the polycarbonate resin solution, and subjecting the remaining resin to irradiation with an energy ray, heating, etc. Specifically, a coating is formed by a crosslinking or polymerization reaction of the polycarbonate resin by irradiation with an energy ray such as an ultraviolet ray or by heating. When a heating process is employed, the heating temperature is preferably 50-150°C, more preferably 70-130°C, and still more preferably 80-120°C.

The thickness of the base material film is preferably in the range of 5-200 µm, especially 10-120 µm, and more preferably 15-60 µm. A coating as thin as less than 5 µm is not strong enough and a scratch can easily reach the base material whereas a coating as thick as more than 200 µm is likely to result peeling due to shrinkage of the coating, and is economically disadvantageous considering the use of the coating that is eventually peeled off and discarded.

### EXAMPLES

Hereinafter, the present invention will be described in more detail by way of examples, although the present invention is not particularly limited to these examples.

### (1) Solubility

Appearance of the resin solution was visually inspected and evaluated according to the following indices.
Transparent with no undissolved resin in the resin solution: "Favorable"
The resin solution is cloudy: "Slightly poor"
Resin did not dissolve at all: "Poor"

### (2) Crosslinkability (UV curability)

The obtained resin solution was poured into a silicon mold with a rectangular hole measuring 65 x 10 x 3 (mm), irradiated with UV light under the following conditions, and evaluated by the time it took to cure.
Equipment used: UV lamp (ultraviolet irradiation equipment from Iwasaki Electric Co., Ltd.)
UV wavelength: 365 nm
UV irradiance: 50 mw/cm² x 10 minutes
Cured within 8 minutes: "Favorable"
Cured within 12 minutes, but it took over 8 minutes: "Slightly poor"
Cured within 24 minutes, but it took over 12 minutes: "Acceptable"

The sample derived from the resin solution was judged to have cured when it could be released from the silicon mold. Specifically, the time from the start of UV irradiation to the time when the sample formed from the resin solution can be released from the silicon mold was measured as the "time that took to cure" mentioned above.

### (3) Appearance of molded piece

The appearance of the resulting molded piece was evaluated visually.
Visually transparent without cloudiness or coloration of the resin composition: "Favorable"
Turbid or colored, but highly transparent: "Slightly poor"
Strongly turbid or cloudy with no transparency
(although its use may be limited in the fields where transparency is required, it may be used in other fields): "Poor"

### (4) Impact strength

Impact strength of the resin composition (UV-cured resin piece) obtained in (2) above was measured using an impact tester.
Impact tester: Impact tester IT from Toyo Seiki Seisaku-sho, Ltd.
Test conditions: The sample piece was fixed to the jig, and an Izod weight of 2J was swung down from an angle of 150 degrees.

### (5) Chemical resistance

In a 20 ml vial, 0.5 g of a molded piece and 4.5 g of methylene chloride were placed and stirred. Appearance of the resulting solution was visually inspected and evaluated according to the following indices.
Undissolved residue is present in the solution: "Favorable"
Transparent with no undissolved resin in the solution: "Poor"
Note that a molded piece that does not easily dissolve in the solvent can be said to have excellent chemical resistance.

### (Example 1)

Into 730 ml of a 6.5 w/w% aqueous sodium hydroxide solution, monomers as raw materials (dihydroxy compounds), namely, 96 g (0.36 mol) of bisphenol MIBK (4,4'-(1,3-dimethylbutylidene)bisphenol; hereinafter abbreviated as "MIBK") and 4.0 g (0.02 mol) of 4,4'-dihydroxybenzophenone (hereafter abbreviated as "4,4'DHBP": from Tokyo Chemical Industry Co., Ltd.), and also 0.5 g of hydrosulfite (antioxidant/coloring inhibitor) were dissolved.

To this, 300 ml of methylene chloride was added. Then, while stirring and also keeping the temperature at 15-25°C, 51.8 g of phosgene was blown therein over about 40 minutes.

After the phosgene blowing, 2.20 g of p-t-butylphenol (hereinafter abbreviated as "PTBP": from Dainippon Ink and Chemicals, Incorporated) was further added as a molecular weight regulator and thoroughly stirred to emulsify the reaction solution. After the emulsification, 0.5 ml of triethylamine was added, and the mixture was stirred at 20-30°C for about 1 hour to allow the polymerization reaction to proceed.

After the polymerization, the reaction solution was separated into an aqueous phase and an organic phase, the organic phase was neutralized with phosphoric acid, and repeatedly rinsed with water until the conductivity of the wash liquid (aqueous phase) became 100 µS/cm or less. The resulting polymer solution was transferred onto an aluminum plate to remove the solvent by evaporation on a hot plate, and the resulting solid was further dried at 120°C for 24 hours to obtain a polymer solid.

As a result of analyzing the obtained polymer by infrared absorption spectroscopy, absorption due to a carbonyl group at around 1,770 cm⁻¹ and absorption due to an ether bond at around 1,240 cm⁻¹ were observed, confirming that it was a polycarbonate resin with a carbonate bond.

In a 20 ml vial, 1 g of the aforementioned polycarbonate resin and 9 g of tetrahydrofurfuryl methacrylate (THF-M) were placed and stirred to obtain a polycarbonate resin solution.

Subsequently, the polycarbonate resin solution described above was poured into a silicon mold with a rectangular hole measuring 65 x 10 x 3 (mm), and irradiated with UV light to obtain a UV-cured piece (molded body). UV irradiation conditions were as follows.
Equipment used: UV lamp (ultraviolet irradiation equipment from Iwasaki Electric Co., Ltd.)
UV wavelength: 365 nm
UV irradiance: 50 mw/cm² x 10 minutes
The physical properties of the resulting polycarbonate resin, polycarbonate resin solution, and molded body are summarized in Table 1 below.

### (Examples 2-14 and Comparative examples 1-5)

Polycarbonate resins, polycarbonate resin solutions, and molded bodies were obtained in the same manner as in Example 1, except that the monomers (dihydroxy compounds) and the terminating agent (hydroxy compound) as raw materials were changed in terms of the monomer types and mole ratios (mol%) as shown in Table 1, and that 1% by mass of 2-hydroxy-2-methylpropiophenone (also referred to as HMP), i.e., a radical initiator, was added to the resin solutions of some of the Comparative examples.

The physical properties of the resulting polycarbonate resins, polycarbonate resin solutions, and molded bodies are summarized in the table below.

**[Table 1]**

| | Polycarbonate resin (PC resin) | | | | | | | | | | Polycarbonate resin solution | | | | Physical properties of molded body | | | | |
|---|---|---|---|---|---|---|---|---|---|---|---|---|---|---|---|---|---|---|---|
| | Main backbone monomer of PC (mol%) | | | | | | | | Terminal monomer of PC | Polymerizability | Solvent used | HMP (Photopolymerization initiator) | Concentration of PC in total resin solution | Solubility | Crosslinkability (UV curability) | Required curing time (min.) | Appearance of molded piece (Visual inspection) | Impact resistance value (kJ/m) | Chemical resistance |
| | General formula (1) | General formula (2) | General formula (3) | | | | | | | | | | | | | | | | |
| | 4,4' DHBP | 2,4-DHBP | MIBK | BPAF | BPZ | BPE | BPAP | BPA | | | | | | | | | | | |
| | | | | | | | | | | | | (wt%) | (wt%) | | | | | | |
| Comparative example 1 | No resin used | | | | | | | | | - | THF-M | 1 | 0 | Favorable | Favorable | 5 | Favorable | 0.73 | Poor |
| Comparative example 2 | 0 | 0 | 99.5 | 0 | 0 | 0 | 0 | 0 | PTBP | Favorable | THF-M | 1 | 10 | Favorable | Favorable | 5 | Favorable | 1.86 | Poor |
| Comparative example 3 | 0 | 0 | 0 | 0 | 0 | 0 | 0 | 100 | PTBP | Favorable | THF-M | 1 | 10 | Poor | - | - | - | - | - |
| Comparative example 4 | 5 | 0 | 0 | 0 | 0 | 0 | 0 | *95* | PTBP | Favorable | THF-M | 0 | 10 | Poor | - | - | - | - | - |
| Comparative example 5 | 50 | 0 | 50 | 0 | 0 | 0 | 0 | 0 | PTBP | Poor | - | - | - | - | - | - | - | - | - |
| Example 1 | 0.5 | 0 | 100 | 0 | 0 | 0 | 0 | 0 | PTBP | Favorable | THF-M | 0 | 10 | Favorable | Acceptable | 24 | Poor | 6.14 | Favorable |
| Example 2 | 5 | 0 | 95 | 0 | 0 | 0 | 0 | 0 | PTBP | Favorable | THF-1M | 0 | 10 | Favorable | Favorable | 8 | Slightly poor | 7.24 | Favorable |
| Example 3 | 10 | 0 | 90 | 0 | 0 | 0 | 0 | 0 | PTBP | Favorable | THF-M | 0 | 10 | Favorable | Favorable | 8 | Slightly poor | 5.74 | Favorable |
| Example 4 | 20 | 0 | 80 | 0 | 0 | 0 | 0 | 0 | PTBP | Favorable | THF-M | 0 | 10 | Favorable | Favorable | 8 | Slightly poor | 2.45 | Favorable |
| Example 5 | 25 | 0 | 75 | 0 | 0 | 0 | 0 | 0 | PTBP | Slightly poor | THF-M | 0 | 10 | Slightly poor | Slightly poor | 12 | Favorable | 6.47 | Favorable |
| Example 6 | 10 | 0 | 90 | 0 | 0 | 0 | 0 | 0 | MBZT | Favorable | THF-M | 0 | 10 | Favorable | Favorable | 8 | Favorable | 5.31 | Favorable |
| Example 7 | 5 | 0 | 95 | 0 | 0 | 0 | 0 | 0 | UNIOX M-2000 | Favorable | THF-M | 0 | 10 | Slightly poor | Slightly poor | 12 | Slightly poor | 4.46 | Favorable |
| Example 8 | 5 | 0 | 95 | 0 | 0 | 0 | 0 | 0 | PHEP | Favorable | THF-M | 0 | 10 | Favorable | Favorable | 8 | Slightly poor | 6.67 | Favorable |
| Example 9 | 0 | 5 | 95 | 0 | 0 | 0 | 0 | 0 | PTBP | Favorable | THF-M | 0 | 10 | Favorable | Favorable | 8 | Slightly poor | 1.75 | Favorable |
| Example 10 | 5 | 0 | 0 | 95 | 0 | 0 | 0 | 0 | PTBP | Favorable | THF-M | 0 | 10 | Favorable | Favorable | 8 | Slightly poor | 3.61 | Favorable |
| Example 11 | 5 | 0 | 0 | 0 | 95 | 0 | 0 | 0 | PTBP | Favorable | THF-M | 0 | 10 | Favorable | Favorable | 8 | Poor | 4.35 | Favorable |
| Example 12 | 5 | 0 | 0 | 0 | 0 | 95 | 0 | 0 | PTBP | Favorable | THF-M | 0 | 10 | Favorable | Favorable | 8 | Favorable | 5.49 | Favorable |
| Example 13 | 5 | 0 | 0 | 0 | 0 | 0 | 95 | 0 | PTBP | Favorable | THF-M | 0 | 10 | Favorable | Favorable | 8 | Poor | 3.22 | Favorable |

As can be appreciated from the results of the examples and comparative examples, it was confirmed that for the polycarbonate resin of each example, in which a DHBP structure was provided as the main chain, the curing reaction can occur in a short time without using a photopolymerization initiator, and the various physical properties can be achieved in good balance. Specifically, the polycarbonate resin of each example was curable by itself through irradiation with an energy ray, forming a molded body with excellent impact resistance, chemical resistance, etc. In some examples, including Example 1, the polycarbonate resins did not necessarily show good results in terms of appearance, but these polycarbonate resins had excellent impact resistance values, etc. and were therefore suitable for applications where hue is not important.

Furthermore, various types of solvents were investigated to identify those suitable for dissolving the polycarbonate resins and forming polycarbonate resin solutions. Specifically, a resin accounting for 10% by weight of the mixture was mixed with a solvent to evaluate whether or not it has compatibility, and whether or not a cured product could be obtained through UV irradiation as follows. It was confirmed that the polycarbonate resin of each example can form solutions with various solvents and that crosslinking reaction can proceed without using a polymerization initiator (radical initiator, HMP). The progress of the curing reaction was evaluated by irradiating the mixture with UV light under the same conditions as those for the evaluation item, crosslinking (UV curability), in Table 1 to visually inspect the presence of the cured product. The solubility was evaluated as "favorable" when a homologous solution was formed.

**[Table 2]**

| Solvent | | | Type Refractive index | Methyl methacrylate MMA 1.490 | | Styrene 1.546 | | Tetrahydrofurfuryl acrylate THF-A 1.460 | | Tetrahydrofurfuryl methacrylate THF-M 1.458 | | Benzyl acrylate BZA 1.518 | | Phenoxyethyl acrylate PheA 1.517 | | 1,6-Hexanediol diacrylate HDDA 1.460 | |
|---|---|---|---|---|---|---|---|---|---|---|---|---|---|---|---|---|---|
| Resin | | Terminal monomer | HMP (wt%) | Solubility | Curing reaction | Solubility | Curing reaction | Solubility | Curing reaction | Solubility | Curing reaction | Solubility | Curing reaction | Solubility | Curing reaction | Solubility | Curing reaction |
| Example 2 | MIBK 95 wt%/ 4,4'-DHBP 5 wt% | PTBP | 0 | Favorable | Did not cure | Favorable | Did not cure | Favorable | Cured (white gel) | Favorable | Cured (transparent yellow molded body) | Favorable | Cured (pinkish and cloudy) | Favorable | Cured (cloudy) | Favorable | Cured (cloudy) |
| Example 9 | MIBK 95 wt%/ 2,4-DHBP 5 wt% | PTBP | 0 | Favorable | Did not cure | Favorable | Did not cure | Favorable | Cured (white gel) | Favorable | Cured (transparent yellow molded body) | Favorable | Cured (pinkish and cloudy) | Favorable | Cured (cloudy) | Favorable | Cured (cloudy) |
| Example 6 | MIBK 90 wt%/ 4,4'-DHBP 10 wt% | MBZT | 0 | Favorable | Did not cure | Favorable | Did not cure | Favorable | Cured (white gel) | Favorable | Cured (transparent yellow molded body) | Favorable | Cured (pinkish and cloudy) | Favorable | Cured (transpar ent molded body) | Favorable | Cured (pinkish and cloudy) |
| Example 10 | BPAF 95 wt%/ 4,4'-DHBP 5 wt% | PTBP | 0 | Favorable | Did not cure | Favorable | Did not cure | Favorable | Cured (white gel) | Favorable | Cured (transparent yellow molded body) | Favorable | Cured (cloudy) | Favorable | Cured (cloudy) | Favorable | Cured (cloudy) |
| - | BPC 95 wt%/ 4,4'-DHBP 5 wt% | PTBP | 0 | Favorable | Did not cure | Favorable | Did not cure | Favorable | Cured (white gel) | Favorable | Cured (transparent yellow molded body) | Favorable | Cured (cloudy) | Favorable | Cured (cloudy) | Favorable | Cured (cloudy) |

The molecular structures of the monomers, etc. used in the examples and comparative examples were as follows.

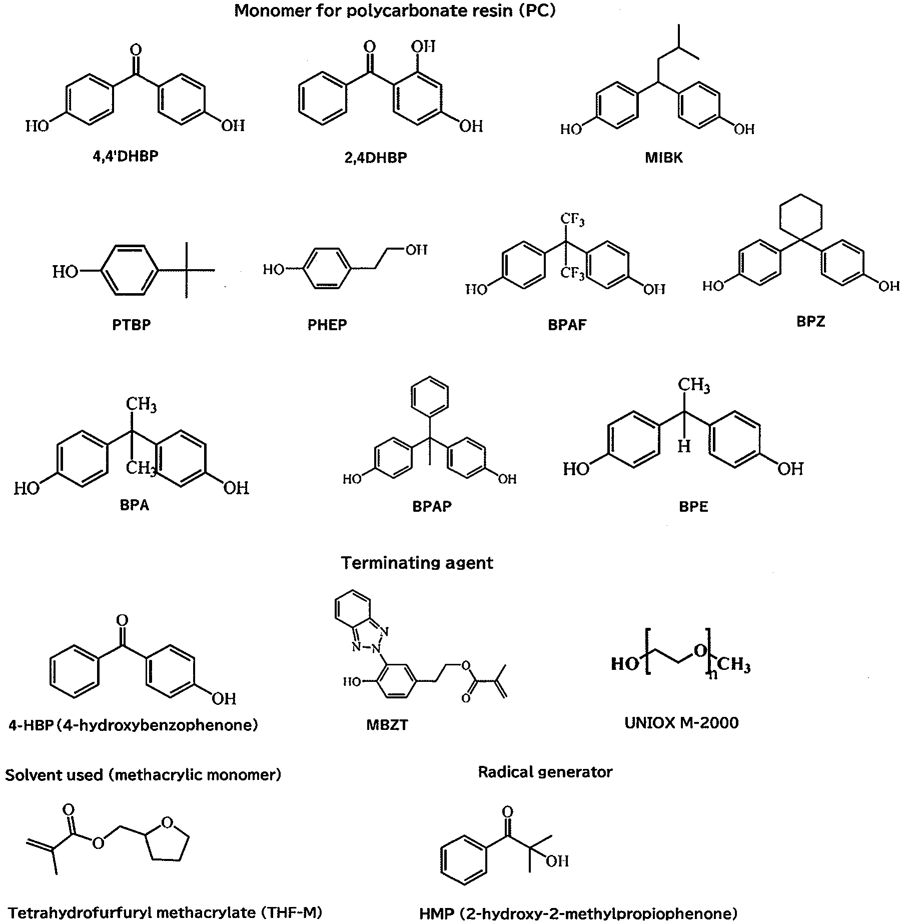

Although preferable embodiments of the present invention have been described in detail with reference to examples, etc., the present invention is not limited to these examples. A person having ordinary skill in the art to which the present invention pertains would obviously conceive of various alterations and modifications within the scope of the technical spirit stated in the claims, and such alterations and modifications should be construed as being duly within the technical scope of the present invention.

## Claims

1. A polycarbonate resin comprising:
a structural unit (A) derived from a monomer represented by general formula (1) below and/or a structural unit (B) derived from a monomer represented by general formula (2) below, and
a structural unit (C) derived from a monomer represented by general formula (3) below,
wherein the total proportion of the structural units (A) and (B) is 0.5-25 mol%, and the proportion of the structural unit (C) is 75-99.5 mol%, relative to the total number of moles of the structural units (A)-(C) constituting the polycarbonate resin: 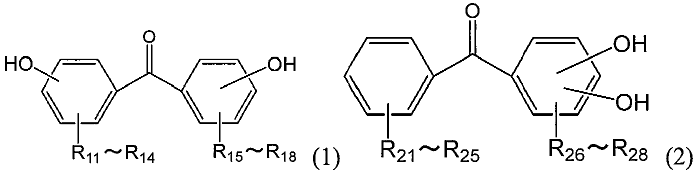
in general formula (1),
R₁₁-R₁₄ and R₁₅-R₁₈ each independently represent hydrogen, fluorine, chlorine, bromine, iodine, or an optionally substituted C1-C20 alkyl group, C6-C12 aryl group, C2-C12 alkenyl group, C1-C5 alkoxy group, or C7-C17 aralkyl group, and
in general formula (2),
R₂₁-R₂₅ and R₂₆-R₂₈ each independently represent hydrogen, fluorine, chlorine, bromine, iodine, or an optionally substituted C1-C20 alkyl group, C6-C12 aryl group, C2-C12 alkenyl group, C1-C5 alkoxy group, or C7-C17 aralkyl group; 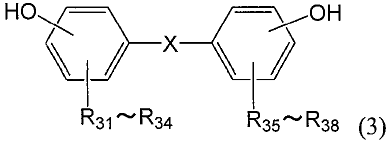
in general formula (3),
R₃₁-R₃₄ and R₃₅-R₃₈ each independently represent hydrogen, fluorine, chlorine, bromine, iodine, or an optionally substituted C1-C20 alkyl group, C6-C12 aryl group, C2-C12 alkenyl group, C1-C5 alkoxy group, or C7-C17 aralkyl group, and
X is as follows: 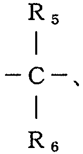 -S-, - (CH₂)_{C}-, -O-, -SO-, -SO₂-, 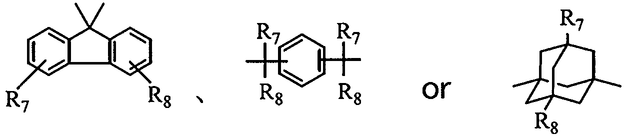
wherein, R₅ and R₆ each independently represent hydrogen, fluorine, chlorine, bromine, iodine, or an optionally substituted C1-C20 alkyl group, C1-C5 alkoxy group, or C6-C12 aryl group, or R₅ and R₆ represent groups that bind to each other to form a C5-20 carbon ring or a heterocyclic ring having 5-12 elements (except when both of R₅ and R₆ are methyl groups),
R₇ and R₈ each independently represent hydrogen, fluorine, chlorine, bromine, iodine, or an optionally substituted C1-C9 alkyl group, C1-C5 alkoxy group, C2-C12 alkenyl group, or C6-C12 aryl group, and
c represents an integer from 0 to 20.

2. The polycarbonate resin according to claim 1, wherein the proportion of the structural units (A) and (B) is 5-20 mol%, and the proportion of the structural unit (C) is 80-95 mol%, relative to the total number of moles of the structural units (A)-(C) constituting the polycarbonate resin.

3. The polycarbonate resin according to claim 1, wherein
in general formula (1) above,
R₁₁-R₁₄ and R₁₅-R₁₈ each independently represent hydrogen, or an optionally substituted C1-C20 alkyl group or C1-C5 alkoxy group, and
in general formula (2) above,
R₂₁-R₂₅ and R₂₆-R₂₈ each independently represent hydrogen, or an optionally substituted C1-C20 alkyl group or C1-C5 alkoxy group.

4. The polycarbonate resin according to claim 3, wherein the monomer represented by general formula (1) above is represented by formula (1-1) below, and the monomer represented by general formula (2) above is represented by formula (2-1) below:

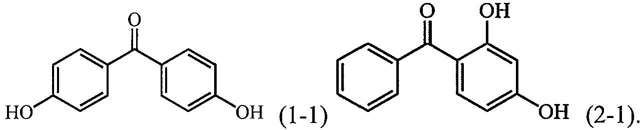

5. The polycarbonate resin according to claim 1, wherein
in general formula (3) above,
R₃₁-R₃₄ and R₃₅-R₃₈ each independently represent hydrogen, or an optionally substituted C1-C20 alkyl group or C1-C5 alkoxy group, and
X is as follows: 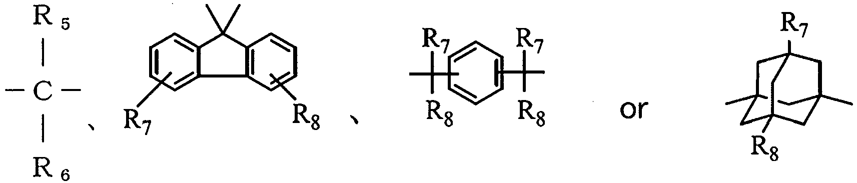
wherein, R₅ and R₆ each independently represent hydrogen, or an optionally substituted C1-C20 alkyl group or C6-C12 aryl group, or R₅ and R₆ represent groups that bind to each other to form a C5-20 carbon ring or a heterocyclic ring having 5-12 elements, and
R₇ and R₈ each independently represent hydrogen, or an optionally substituted C1-C9 alkyl group or C6-C12 aryl group.

6. The polycarbonate resin according to claim 5, wherein the monomer represented by general formula (3) above is selected from the group consisting of formulae (3-1)-(3-4) below:

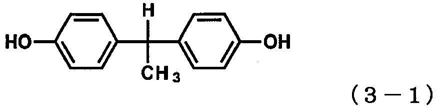

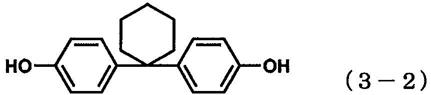

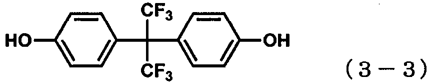

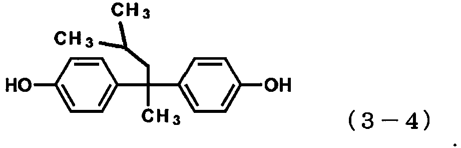

7. The polycarbonate resin according to claim 1, wherein a terminal structure of the polycarbonate resin is represented by formula (4) below: 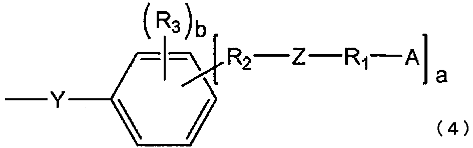
in general formula (4),
A is a vinyl group, an isopropenyl group, a styryl group or a methine group,
R₁ and R₂ are each independently selected from the group consisting of a single bond and an optionally substituted C1-C20 alkylene group,
R₃ are each independently selected from the group consisting of a hydrogen atom, a hydroxy group, an optionally substituted C1-C20 alkyl group, an optionally substituted C1-C10 alkoxy group, an optionally substituted C6-C12 aryl group, and an optionally substituted C5-C12 heteroaryl group,
Z are each independently selected from the group consisting of a single bond, an ether group, a carbonyl group, and an ester group,
a is an integer from 0 to 3,
b is an integer from 1 to 4, and
Y is an ether group or an ester group.

8. The polycarbonate resin according to claim 1, wherein the terminal structure of the polycarbonate resin is derived from a compound selected from the group consisting of p-t-butylphenol (PTBP), 2-[2-hydroxy-5-[2-(methacryloyloxy)ethyl]phenyl]-2H-benzotriazole (MBZT), 4-hydroxybenzophenone (4-HBP), polyoxyalkylene-monoalkyl ether, and p-hydroxyphenyl ethanol (PHEP).

9. The polycarbonate resin according to claim 1, wherein the main chain of the polycarbonate resin does not contain an unsaturated bond.

10. A monomer mixture for polymerization for forming structural units of a thermoplastic resin, comprising:
a monomer (a) represented by general formula (1) below and/or a monomer (b) represented by general formula (2) below; and
a monomer (c) represented by general formula (3) below,
wherein the total proportion of the monomers (a) and (b) is 0.5-25 mol% and the proportion of the monomer (c) is 75-99.5 mol%, relative to the total number of moles of the monomers (a)-(c): 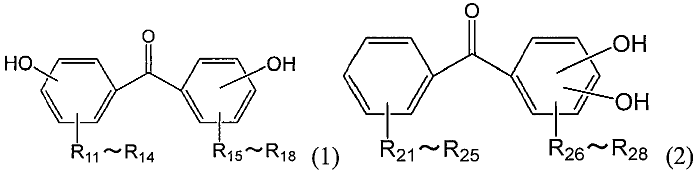
in general formula (1),
R₁₁-R₁₄ and R₁₅-R₁₈ each independently represent hydrogen, fluorine, chlorine, bromine, iodine, or an optionally substituted C1-C20 alkyl group, C6-C12 aryl group, C2-C12 alkenyl group, C1-C5 alkoxy group, or C7-C17 aralkyl group, and
in general formula (2),
R₂₁-R₂₅ and R₂₆-R₂₈ each independently represent hydrogen, fluorine, chlorine, bromine, iodine, or an optionally substituted C1-C20 alkyl group, C6-C12 aryl group, C2-C12 alkenyl group, C1-C5 alkoxy group, or C7-C17 aralkyl group; 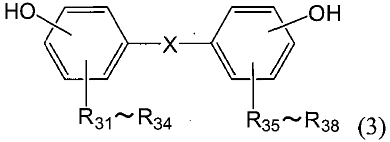
in general formula (3),
R₃₁-R₃₄ and R₃₅-R₃₈ each independently represent hydrogen, fluorine, chlorine, bromine, iodine, or an optionally substituted C1-C20 alkyl group, C6-C12 aryl group, C2-C12 alkenyl group, C1-C5 alkoxy group, or C7-C17 aralkyl group, and
X is as follows: 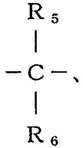 -S-, -(CH₂)_{C}-, -O-, -SO-, -SO₂-, 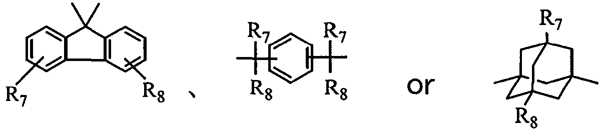
wherein, R₅ and R₆ each independently represent hydrogen, fluorine, chlorine, bromine, iodine, or an optionally substituted C1-C20 alkyl group, C1-C5 alkoxy group, or C6-C12 aryl group, or R₅ and R₆ represent groups that bind to each other to form a C5-20 carbon ring or a heterocyclic ring having 5-12 elements (except when both of R₅ and R₆ are methyl groups),
R₇ and R₈ each independently represent hydrogen, fluorine, chlorine, bromine, iodine, or an optionally substituted C1-C9 alkyl group, C1-C5 alkoxy group, C2-C12 alkenyl group, or C6-C12 aryl group, and
c represents an integer from 0 to 20.

11. A polycarbonate resin solution comprising the polycarbonate resin according to claim 1, and a solvent.

12. The polycarbonate resin solution according to claim 11, wherein the solvent contains at least a (meth)acrylate ester solvent.

13. The polycarbonate resin solution according to claim 12, wherein the (meth)acrylate ester is tetrahydrofurfuryl methacrylate (THF-M).

14. The polycarbonate resin solution according to claim 11, wherein the concentration of the polycarbonate resin is 1-20% by mass based on the total mass of the polycarbonate resin solution.

15. A method for producing a crosslinked polycarbonate resin, comprising subjecting the polycarbonate resin solution according to claim 11 to UV irradiation.

16. A crosslinked polycarbonate resin, obtained by the method according to claim 15.

17. A molded body comprising the crosslinked polycarbonate resin according to claim 16.
